(19) Europäisches Patentamt
European Patent Office
Office européen des brevets

(11) Veröffentlichungsnummer: **0 302 485**
**A2**

(12) # EUROPÄISCHE PATENTANMELDUNG

(21) Anmeldenummer: **88112671.8**

(51) Int. Cl.4: **C08L 77/00 , C08L 71/04**

(22) Anmeldetag: **04.08.88**

(30) Priorität: **07.08.87 DE 3726283**

(43) Veröffentlichungstag der Anmeldung:
**08.02.89 Patentblatt 89/06**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Muehlbach, Klaus, Dr.**
**Dr.-Heinrich-Winter-Strasse 19**
**D-6148 Heppenheim(DE)**
Erfinder: **Brandt, Hermann, Dr.**
**Keltenstrasse 30**
**D-6707 Schifferstadt(DE)**
Erfinder: **Boehlke, Klaus, Dr.**
**Gerhart-Hauptmann-Strasse 53**
**D-6717 Hessheim(DE)**

(54) **Thermoplastische Formmassen.**

(57) Thermoplastische Formmassen, enthaltend als wesentliche Komponenten

A) 5 - 95 Gew.% eines Polyamids
B) 5 - 95 Gew.% eines modifizierten Polyphenylenethers, hergestellt aus
  $b_1$) 4,95 - 99,9 Gew.% eines Polyphenylenethers,
  $b_2$) 0 - 90 Gew.% eines vinylaromatischen Polymeren,
  $b_3$) 0,05 - 10 Gew.% mindestens einer Verbindung aus der Gruppe gebildet aus
    $b_{31}$) einer $\alpha,\beta$-ungesättigten Dicarbonylverbindung,
    $b_{32}$) eines Amid-Gruppen enthaltenden Monomeren mit einer polymerisierbaren Doppelbindung und
    $b_{33}$) eines Lactam-Gruppen enthaltenden Monomeren mit einer polymerisierbaren Doppelbindung,
  $b_4$) 0 - 80 Gew.% weiterer pfropfaktiver Monomerer und
  $b_5$) 0,01 - 0,09 Gew.% eines Radikalstarters
C) 0 - 90 Gew.% eines nicht-modifizierten Polyphenylenethers,
D) 0 - 45 Gew.% eines vinylaromatischen Polymeren
E) 0 - 40 Gew.% eines schlagzäh modifizierenden Kautschuks.

EP 0 302 485 A2

## Thermoplastische Formmassen

Die Erfindung betrifft neue thermoplastische Formmassen, enthaltend als wesentliche Komponenten

A) 5 - 95 Gew.% eines Polyamids

B) 5 - 95 Gew.% eines modifizierten Polyphenylenethers, hergestellt aus

$b_1$) 4,95 - 99,9 Gew.% eines Polyphenylenethers,

$b_2$) 0 - 90 Gew.% eines vinylaromatischen Polymeren,

$b_3$) 0,05 - 10 Gew.% mindestens einer Verbindung aus der Gruppe gebildet aus

$b_{31}$) einer $\alpha,\beta$-ungesättigten Dicarbonylverbindung,

$b_{32}$) eines Amid-Gruppen enthaltenden Monomeren mit einer polymerisierbaren Doppelbindung und $b_{33}$) eines Lactam-Gruppen enthaltenden Monomeren mit einer polymerisierbaren Doppelbindung,

$b_4$) 0 - 80 Gew.% weitere pfropfaktive Monomere und

$b_5$) 0,01 - 0,09 Gew.% eines Radikalstarters

C) 0 - 90 Gew.% eines nicht-modifizierten Polyphenylenethers,

D) 0 - 45 Gew.% eines vinylaromatischen Polymeren

E) 0 - 40 Gew.% eines schlagzäh modifizierenden Kautschuks, wobei sich die Prozentzahlen A) - E) und $b_1$) - $b_5$) jeweils zu 100 % ergänzen.

Außerdem betrifft die Erfindung ein Verfahren zur Herstellung derartiger Formmassen sowie deren Verwendung zur Herstellung von Formkörpern und die daraus hergestellten Formkörper.

Polyphenylenether (PPE) sind Kunststoffe mit sehr guten thermischen, mechanischen und elektrischen Eigenschaften, weisen jedoch nur eine sehr geringe Lösungsmittelbeständigkeit auf. Dies gilt auch für ein im Handel befindliches Gemisch aus Polyphenylenether und Styrolpolymerisaten. Die Verwendbarkeit derartiger Produkte ist daher eingeschränkt.

Aus der US-A-3 379 792 ist bekannt, daß die Schmelzfließeigenschaften von Polyphenylenethern durch Zusatz von bis zu 25 Gew.% eines Polyamids verbessert werden. Ferner wird in dieser Patentschrift festgestellt, daß bei einem Polyamidzusatz von mehr als 20 Gew.% andere Eigenschaften des Polyphenylenethers erheblich verschlechtert werden.

Aus der GB-A 2 054 623 sind auch bereits Mischungen aus Polyphenylenethern und Polyamiden mit höheren Polyamid-Gehalten bekannt; zur Erzielung guter Eigenschaften ist es jedoch erforderlich, einen längeren Mischvorgang in der Schmelze vorzunehmen. Bei solch hoher thermischer Belastung über größere Zeiträume treten jedoch leicht Abbauerscheinungen auf.

In der EP-A 24 120 und EP-A 46 040 werden Mischungen aus Polyamiden, nicht modifizierten Polyphenylenethern und Maleinsäureanhydrid und/oder Maleinsäureimid bzw. deren Copolymeren mit Styrol beschrieben. Die in diesen Schriften beschriebenen Massen bzw. die daraus hergestellten Formkörper weisen eine unbefriedigende Schlagzähigkeit, insbesondere bei der Verwendung von Kautschuk als zusätzliche Komponente, und einen für viele Anwendungszwecke viel zu niedrigen Schmelzindex (MFI) auf.

Aus der JP-A 59/66452 sind Abmischungen aus Polyphenylenethern und Polyamiden bekannt, die ein mit Carbonsäuren oder deren Derivaten modifiziertes PPE enthalten, welches in Anwesenheit von mindestens 0,1 Gew.%, vorzugsweise 0,3 - 5 Gew.% eines Radikalstarters hergestellt wird. Derartig hohe Mengen an Radikalstartern führen zu unerwünschten Nebenreaktionen, insbesondere häufig zu einer Vernetzung, die die Eigenschaften der Produkte nachteilig beeinflussen.

Aus der WO-A 87/0540 (PPE) und der EP-A 226 910 sind Formmassen auf der Basis von Polyphenylenethern und Polyamiden bekannt, in denen ein modifiziertes PPE enthalten ist, welches durch Umsetzung von PPE mit Verbindungen, die eine C=C-Doppelbindung und eine säurefunktionelle Gruppe enthalten, hergestellt wird. Wesentlich ist nach den Angaben in dieser Druckschrift, daß in Abwesenheit von Radikalstartern gearbeitet wird. Die auf diese Weise erhaltenen Produkte sind insgesamt nicht voll zufriedenstellend, da die zur Modifizierung des PPE eingesetzten Verbindungen keine eindeutige Reaktion mit dem PPE eingehen, so daß mehrere verschiedene modifizierte Polyphenylenether entstehen, deren Verträglichkeit mit dem zugesetzten Polyamid unterschiedlich ist, was sich auf die mechanischen Eigenschaften der Massen negativ auswirken kann.

Aufgabe der vorliegenden Erfindung war es, thermoplastische Formmassen zur Verfügung zu stellen, die neben einer guten Verarbeitbarkeit gute thermische, mechanische und dielektrische Eigenschaften wie eine hohe Schlagzähigkeit (auch mehraxial) und eine helle Eigenfarbe aufweisen.

Erfindungsgemäß wird diese Aufgabe durch die eingangs definierten thermoplastischen Formmassen gelöst.

Bevorzugte Massen dieser Art sind den Unteransprüchen zu entnehmen.

Als Komponente A enthalten die erfindungsgemäßen Formmassen 5 bis 95 Gew.% mindestens eines Polyamids. Geeignet sind lineare Polyamide z.B. mit einer relativen Viskosität von 2,2 bis 4,5, gemessen in 1 gew.-%iger Lösung in 96 gew.-%iger Schwefelsäure bei 23 °C. Bevorzugt seien genannt Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren sind beispielsweise Alkandicarbonsäuren mit 6 bis 12, insbesondere 6 bis 10 Kohlenstoffatomen sowie Terephthalsäure und Isophthalsäure sowie beliebige Mischungen dieser Säuren.

Als Diamine, seien beispielsweise Alkandiamine mit 6 bis 12, insbesondere 6 bis 8 Kohlenstoffatomen, ferner m-Xylylendiamin, Bis(4-aminophenyl)methan, Bis-(4-aminocyclohexyl)methan oder Bis(4-aminophenyl)propan-2,2 oder deren Mischungen genannt.

Es ist auch möglich und manchmal vorteilhaft Mischungen der genannten Polyamide zu verwenden. Besondere technische Bedeutung haben Polyamid-6 (Polycaprolactam), Polyamid-66 (Polyhexamethylenadipinamid) sowie Polyamide, die aus Hexamethylendiamin und Isophthalsäure sowie Terephthalsäure aufgebaut sind, erlangt.

Gemäß einer besonders bevorzugten Ausführungsform wird als Komponente A ein Polyamid eingesetzt, das zu mindestens 80 Gew.% aus wiederkehrenden Einheiten der allgemeinen Formel V

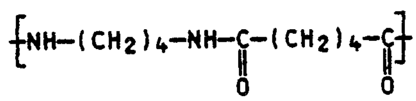

aufgebaut ist.

Derartige Polyamide sind z.B. durch Kondensation von 1,4-Diaminobutan mit Adipinsäure unter erhöhter Temperatur erhältlich. Herstellungsverfahren für Polyamide dieser Struktur sind z.B. in den EP-A-38 094, EP-A-38 582 und EP-A-39 524 beschrieben.

Derartige Produkte, die Polyamide der obigen Struktur (Polyamid-4,6) enthalten, zeichnen sich besonders durch gute Schlagzähigkeiten und insbesondere auch eine helle Eigenfarbe aus.

Bevorzugte Formmassen enthalten 5 bis 80 Gew.%, insbesondere 25 bis 70 Gew.-% an thermoplastischen Polyamiden.

Als Komponente B enthalten die erfindungsgemäßen Formmassen 5 bis 95, vorzugsweise 20 bis 95, insbesondere 30 bis 65 Gew.% mindestens eines modifizierten Polyphenylenethers, der aus den Komponenten $b_1$, $b_2$, $b_3$, $b_5$ und gegebenenfalls $b_4$ hergestellt wird.

Unter "Modifizierung" soll dabei eine durch die Umsetzung der Komponenten $b_1$) bis $b_5$) hervorgerufene Veränderung von $b_1$) und $b_2$) verstanden werden.

Bei der Komponente $b_1$ handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Der Anteil der Komponente $b_1$), bezogen auf die Summe der Komponenten $b_1$) bis $b_5$) beträgt 4,95 bis 99,9, vorzugsweise 10 bis 99,9 und insbesondere 50 bis 90 Gew.%.

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Nur beispielsweise seien hier einige Polyphenylenether aufgeführt, wie sie u.a. in O. Olabisi, l.c., S. 224 bis 230 und 245 genannt werden wie Poly(2,6-diethyl-1,4-phenylen)-oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Die Komponente $b_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist.

Das Molekulargewicht (Gewichtsmittel) dieser Polymere liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend

seien hier vinylaromatische Polymere aus Styrol, Chlorstyrol, α-Methylstyrol, p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureestern am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymerer sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions- oder Lösungspolymerisation erwähnt.

Der Anteil des vinylaromatischen Polymeren $b_2$) an der Komponente B) liegt im Bereich von 0 bis 90, vorzugsweise 0 bis 70 und insbesondere 0 bis 60 Gew.%.

Bei Verwendung von Fumarsäure als Bestandteil $b_3$) hat es sich häufig als vorteilhaft erwiesen, wenn die Formmassen einen gewissen Mindestgehalt an vinylaromatischem Polymeren $b_2$), vorzugsweise mindestens 1,95 Gew.%, insbesondere mindestens 4,95 Gew.%, bezogen auf die Komponente B) enthalten.

Als wesentliche Komponente $b_3$) enthält der modifizierte Polyphenylenether B) mindestens eine der Verbindungen $b_{31}$) bis $b_{33}$)

Es können auch Mischungen verschiedener Verbindungen $b_{31}$) bis $b_{33}$) eingesetzt werden, doch ist im allgemeinen die Verwendung nur einer dieser Verbindungsarten vorteilhaft.

Bei $b_{31}$) handelt es sich um eine α,β-ungesättigte Dicarbonylverbindung. Der Anteil von $b_{31}$) beträgt 0,05 bis 10 Gew.%, vorzugsweise 0,1 bis 5 Gew.%, bezogen auf die Summe der Komponenten $b_1$) bis $b_5$).

Es kann sich dabei um

a) Säuren und deren Anhydride,

b) Imide,

c) Halbester und Halbamide und

d) Diester und Diamide handeln.

Als α,β-ungesättigte Dicarbonsäuren oder deren Anhydride (a) seien beispielsweise genannt Maleinsäure, Fumarsäure, Itaconsäure, Tetrahydrophthalsäure, Citraconsäure, Maleinsäureanhydrid, Itaconsäureanhydrid, Glutonanhydrid, Citraconsäureanhydrid oder Tetrahydrophthalsäureanhydrid. Besonders bevorzugt wird Fumarsäure.

Als Imide (b) kommen Maleinimide der allgemeinen Formel I

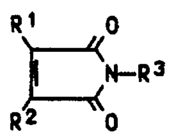 (I) in Frage,

wobei $R^1$, $R^2$ und $R^3$ Wasserstoff, Alkyl-, Alkoxy-, Cycloalkyl-, Alkenyl-, Aryl-, Arylen- oder Alkylengruppen mit 1 bis 12 C-Atomen sind.

Vorzugsweise sind die Substituenten $R^1$, $R^2$ und $R^3$ Wasserstoff oder Alkylgruppen mit 1 bis 4 C-Atomen, beispielsweise Methyl-, Ethyl- oder n-, i- oder t-Butyl, Cycloalkylgruppen mit bis zu 8 C-Atomen oder Phenylgruppen, die gegebenenfalls alkyl- oder alkoxysubstituiert sein können.

Nur beispielhaft seien als bevorzugte Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-(p-Methoxyphenyl)maleinimid, N-Benzylmaleinimid, N-(1-Naphthyl)maleinimid oder deren Mischungen genannt. Von diesen wird N-Phenylmaleinimid besonders bevorzugt.

Bei Halbestern und Halbamiden (c) handelt es sich um Halbester oder Halbamide von α,β-ungesättigten Dicarbonsäuren. Als Beispiele für bevorzugte Dicarbonsäuren seien Maleinsäure, Fumarsäure, Chlormaleinsäure, Dichlormaleinsäure, Methylmaleinsäure und Tetrahydrophthalsäure genannt, von denen Maleinsäure und Fumarsäure besonders bevorzugt werden.

Zur Herstellung der erfindungsgemäß eingesetzten Halbester oder Halbamide können diese Säuren oder deren Anhydride mit den entsprechenden Alkoholen bzw. Aminen umgesetzt werden. Entsprechende Verfahren sind an sich bekannt und in der Literatur beschrieben, so daß sich hier nähere Angaben erübrigen.

Als Alkohole zur Herstellung der Halbester werden bevorzugt primäre und sekundäre Monoalkohole, wie Methanol, Ethanol, n- und i-Propanol, n- und i-Butanol, Pentanole, Hexanole, Heptanole, Octanole, z.B. 2-Ethylhexylalkohol und höhere Alkohole wie Dodecanole und cycloaliphatische Alkohole, z.B. Cyclohexanol eingesetzt. Weiter eignen sich auch Alkohole mit aromatischen Struktureinheiten wie z.B. Benzylalkohol.

Neben C, H und O können die Alkohole auch Heteroatome - in der Hauptkette oder als Substituenten - wie N, S und Si enthalten. Schließlich seien auch Alkohole mit Ketogruppen in der Kette oder mit Halogensubstituenten erwähnt. Bevorzugt werden jedoch Alkanole mit 1 bis 6 C-Atomen.

Als Amine zur Herstellung der erfindungsgemäß eingesetzten Halbamide seien ganz allgemein sekundäre Amine und N-Alkylaniline genannt. Beispiele hierfür sind N-Methyl- oder N-Ethylalkylamine oder N-Methylanilin. Wie die Alkohole können die Amine auch Heteroatome und funktionelle Gruppen enthalten.

Ganz allgemein werden Halbester den Halbamiden vorgezogen.

Formmassen, die Halbester oder Halbamide von $\alpha,\beta$-ungesättigten Dicarbonsäuren enthalten, weisen häufig besonders gute Fließeigenschaften, d.h. besonders hohe Schmelzindex-Werte (MFI), und helle Eigenfarbe auf.

Als Komponente $b_3$) kann auch ein Diester oder Diamid $\alpha,\beta$-ungesättigten Dicarbonsäure (d) eingesetzt werden.

Die Diester bzw. Diamide können sich von den beiden Halbestern und Halbamiden genannten $\alpha,\beta$-ungesättigten Dicarbonsäuren, Alkoholen bzw. Aminen ableiten, so daß sich hier weitere Erläuterungen erübrigen. Bevorzugt werden Fumarsäuredimethylester und Maleinsäuredimethylester.

Bisherige Versuche haben gezeigt, daß der Einsatz von Diestern (d) häufig zu guter Konstanz der Schmelzviskosität bei längerer Temperaturbelastung der erfindungsgemäßen Formmassen führt.

Ebenfalls geeignet als Komponente $b_3$) sind Amidgruppen enthaltende Monomere mit mindestens einer polymerisierbaren Doppelbindung $b_{32}$), vorzugsweise solche der allgemeinen Formeln II oder III

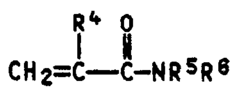

(II)

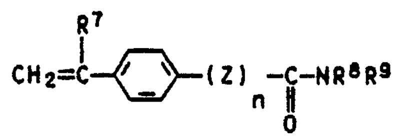

(III),

wobei $R^4$, $R^5$, $R^6$, $R^7$, $R^8$ und $R^9$ Wasserstoff, Alkyl- oder Alkoxygruppen mit 1 bis 12 C-Atomen, Cycloalkylgruppen mit bis zu 12 C-Atomen oder Arylgruppen und Z Alkylengruppen mit 1 bis 12 C-Atomen darstellen und n den Wert 0 oder 1, vorzugsweise 0 hat.

Bevorzugte Substituenten $R^5$, $R^6$, $R^8$ und $R^9$ sind Alkylgruppen mit 1 bis 10 C-Atomen, Cycloalkylgruppen mit bis zu 8 C-Atomen oder Arylgruppen, vorzugsweise Phenyl. $R^4$ und $R^7$ sind bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Der Anteil der Komponente $b_{32}$) beträgt 0,05 bis 10, vorzugsweise 0,1 bis 10, insbesondere 1 bis 5 Gew.%, bezogen auf die Summe der Komponenten $b_1$) bis $b_5$).

Als Komponente $b_3$) kann auch ein Lactam-Gruppen enthaltendes Monomer mit mindestens einer polymerisierbaren Doppelbindung ($b_{33}$) eingesetzt werden.

Vorzugsweise werden Lactame der allgemeinen Struktur IV

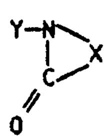

(IV)

eingesetzt, wobei X eine lineare verzweigte Alkylengruppe mit 2 bis 15 C-Atomen darstellt und Y die allgemeine Formel

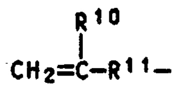

wobei $R^{10}$ ein Wasserstoffatom, eine Alkyl- oder Alkoxygruppe mit 1 bis 4 C-Atomen und $R^{11}$ einen zweibindigen Substituenten

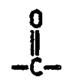

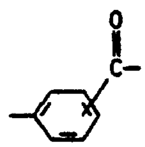

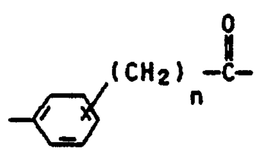
,

wobei n eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen.

Besonders bevorzugt sind Lactameinheiten, die zu Polyamiden polymerisierbar oder copolymerisierbar sind, wie dies in Houben-Weyl, Methoden der organ. Chemie, Band X/2, S. 511 bis 587, (1958) und Band XIV/2, S. 111 bis 131, beschrieben wird.

Beispielsweise seien genannt:

β-Propiolactame (Azetidin-2-one), wie

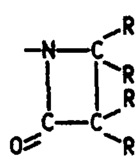

wobei R gleiche oder verschiedene Alkylgruppen mit 1 bis 6 C-Atomen oder Wasserstoff sind. Derartige Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe 3,3′-Dimethyl-3-propiolactam genannt.

Ebenfalls bevorzugte Lactam-Einheiten sind 2-Methylpyrrolidone

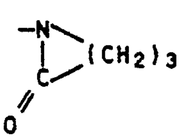

ε-Caprolactam, wie

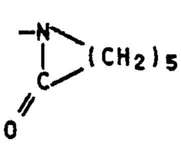

und außerdem 7-Önantholactam, 8-Capryllactam und 12-Laurinlactam wie sie bei K. Dachs, Angewandte Chemie, 74, 540 bis 545, (1962) beschrieben werden. Ganz besonders bevorzugt sind 2-Pyrrolidone und ε-Caprolactame.

Es können auch Mischungen dieser Verbindungen eingesetzt werden.

Vorzugsweise sind die Lactameinheiten über eine Carbonylgruppe am Stickstoff in den Polyphenylenether B eingebaut, wie dies nachstehend allgemein dargestellt ist.

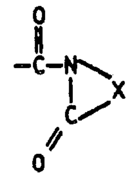

Als besonders bevorzugtes Beispiel einer Komponente $b_{33}$) sei hier nur N-(Meth)acryloyl-ε-caprolactam

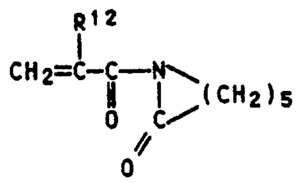

genannt,
wobei $R^{12}$ ein Wasserstoffatom oder eine Methylgruppe sein kann.

Der Anteil der Komponente $b_{33}$) beträgt 0,05 bis 10, vorzugsweise 0,1 bis 10 und insbesondere 0,5 bis 5 Gew.%, bezogen auf die Summe der Komponenten $b_1$) bis $b_5$).

Gegebenenfalls können bei der Herstellung des modifizierten Polyphenylenethers B auch weitere Comonomere $b_4$) eingesetzt werden, die unter den Herstellungsbedingungen mit den Komponenten $b_1$) und gegebenenfalls $b_2$)
reagieren bzw. auf diese aufpfropfen. Beispielsweise seien hier Acrylsäure, Methacrylsäure, Acrylate, Methacrylate und vinylaromatische Monomere wie Styrol, α-Methylstyrol und Vinyltoluol genannt, um nur einige aufzuführen.

Der Anteil der Komponente $b_4$) beträgt 0 bis 80, vorzugsweise 0 bis 45 und insbesondere nicht mehr als 20 Gew.%, bezogen auf die Summe der Komponenten $b_1$) bis $b_5$). Besonders bevorzugt werden Formmassen, die keine Komponente $b_4$) enthalten.

Als Komponente $b_5$) werden bei der Herstellung der modifizierten Polyphenylenether B) 0,01 bis 0,09, vorzugsweise 0,02 - 0,08 und insbesondere 0,03 - 0,07 Gew.% an Radikalstartern eingesetzt.

Der Anteil der Komponente $b_5$) ist in der Regel geringer als die Summe der Anteile der Komponenten $b_3$) und $b_4$).

Prinzipiell können als Radikalstarter die für diesen Zweck bekannten und in der Literatur (z.B. J.K. Kochi, Free Radicals, J. Wiley-Verlag. New York 1973) beschriebenen Verbindungen eingesetzt werden.

In einigen Fällen hat es sich als vorteilhaft herausgestellt, Radikalstarter einzusetzen, deren Halbwertzeit ausreichend groß ist, um sicherzustellen, daß zu dem Zeitpunkt, zu dem das PPE aufgeschmolzen ist, eine signifikante Menge an aktivem Radikalstarter vorhanden ist.

Dies hat zur Folge, daß die Komponenten $b_{31}$) bis $b_{33}$) in einer relativ eindeutigen Reaktion mit dem durch den Radikalstarter aktivierten PPE reagieren und dieses modifizieren können.

Es ist noch nicht eindeutig geklärt, an welcher Stelle des PPE-Moleküls der Radikalstarter angreift, doch deuten erste Erkenntnisse darauf hin, daß die Aktivierung des PPE an dem Methylsubstituenten in o-Stellung zum Sauerstoffatom stattfindet und die Komponenten $b_{31}$) bis $b_{33}$) dementsprechend auch überwiegend in dieser Position angreifen.

Beispielsweise seien als Radikalstarter genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butyl-peroxy-diethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.- Butylperbenzoat, 4,4-Di-tert.-butylperoxyvalerisansäure-butylester, 2,2-Di-tert.-butylperoxybutan, Dicumylperoxid, tert.-Butylcumylperoxid, 1,3-Di(tert.-butylperoxyisopropyl)benzol und Di-tert.-butylperoxid. Bevorzugt werden organische

Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

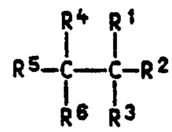

wobei $R^1$ bis $R^6$ unabhängig voneinander Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits wieder funktionelle Gruppen als Substituenten enthalten, wie Carboxyl-, Carboxylderivat-, Hydroxyl-, Amino-, Thiol- oder Epoxygruppen.

Als Beispiel hierfür seien

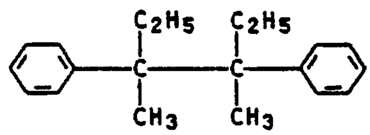

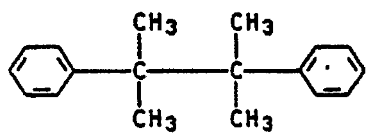

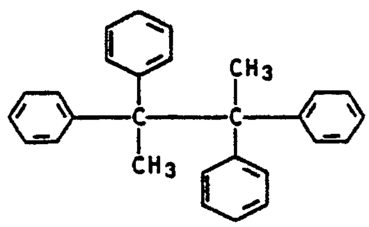

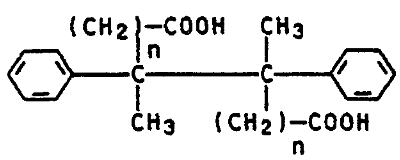

(n = 1 - 5)

genannt. Diese sind zum Teil kommerziell erhältlich. Gute Ergebnisse, insbesondere bezüglich der Fließfähigkeit der erfindungsgemäßen Formmassen, werden mit 3,4-Dimethyl3,4-diphenylexan (Initiator D-407® der Fa. Akzo Chemie) und mit 2,3-Dimethyl-2-3-diphenylbuten erzielt. Daneben werden bevorzugt Cumolhydroperoxide und t-Butylperoxid eingesetzt.

Zur Herstellung des modifizierten Polyphenylenethers B können die Komponenten $b_1$) bis $b_5$) bei 250 bis 350 °C, vorzugsweise 270 bis 350 °C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 0,5 bis 3 min. Besonders gut für das erfindungsgemäße Verfahren eignen sich Zweischneckenextruder.

Nachstehend wird eine besonders bevorzugte Verfahrensvariante beschrieben.

Die Komponenten $b_1$) bis $b_5$) werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen

eingesetzt.

Prinzipiell ist die Herstellung des modifizierten Polyphenylenethers auch in jedem Reaktionsgefäß, welches eine Reaktion der Komponenten miteinander ermöglicht, durchführbar.

Manchmal ist es vorteilhaft, wenn die erfindungsgemäßen Formmassen als Komponente C) einen nichtmodifizierten Polyphenylenether enthalten. Dieser entspricht bevorzugt dem als Komponente $b_1$) eingesetzten Polyphenylenether, weshalb hier auf die dortigen Ausführungen zu geeigneten Verbindungen verwiesen wird. Der Anteil der Komponente C beträgt, falls vorhanden, maximal 90, vorzugsweise weniger als 50 Gew.%, bezogen auf die Summe der Komponenten A) bis E).

Als weiteren Bestandteil D) können die erfindungsgemäßen Formmassen gegebenenfalls in einer Menge bis zu 45, vorzugsweise bis zu 30 Gew.%, vinylaromatische Polymere enthalten (bezogen auf die Summe der Komponenten A) bis E)). Geeignet sind bevorzugt mit Polyphenylenethern verträglich Polymere, wie sie bereits als Komponente $b_2$) beschrieben wurden. Für nähere Einzelheiten sei deshalb auf die Ausführungen zur Komponente $b_2$) verwiesen.

Die Komponente D) kann auch schlagzäh modifiziert sein. Solche Polymere sind dem Fachmann als schlagzähes Polystyrol (HIPS) bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise Polybutadien-, Styrol-Butadien-, Styrol-b-Butadien, Acrylnitril-Butadien-, Ethylen-Propylen-, Polyacrylat- und Polyisopren-Kautschuke genannt.

Neben den in der Komponente D) gegebenenfalls vorhandenen, gepfropften Kautschuken, wie Polybutadien-, Acrylat-, Styrol-Butadien-, Polybuten-Kautschuk, hydrierten Styrol-Butadien-, Acrylnitril-Butadien-, EthylenPropylen- und Polyisopren-Kautschuken können diese auch ungepfropft als Komponente E) zugesetzt werden. Als Kautschuke E) seien weiter erwähnt styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hydrierte Blockcopolymere.

Die Komponente E) kann in Mengen bis 40, vorzugsweise bis zu 30 Gew.%, bezogen auf die Summe der Komponenten A) bis E), in den erfindungsgemäßen Formmassen vorhanden sein.

Neben den Komponenten A) bis E) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.%, bezogen auf das Gesamtgewicht der Komponenten A) bis E).

Als Zusatzstoffe seien genannt Hitze- und Lichtstabilisatoren, Gleit- und Entformungsmittel und Färbemittel wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe wie Gipsfasern, synthetische Calciumsilikate, Kaolin, calciniertes Kaolin, Wollastonit, Talkum, Kreide, ferner Flammschutzmittel, wie Phosphorverbindungen, z.B. Phosphate, Phosphorsäureester, Phosphorigsäureester, Phosphinsäureester, Phosphonigsäureester oder organische Phosphinoxide.

Auch niedermolekulare oder hochmolekulare Polymere kommen als Zusatzstoffe in Betracht.

Die erfindungsgemäßen thermoplastischen Formmassen erhält man zweckmäßig durch Mischen der Einzelkomponenten bei Temperaturen von 250 bis 320 °C in üblichen Mischvorrichtungen, wie Knetern, Banbury-Mischern und Einschneckenextruder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen manchmal eine Reaktion zwischen den Komponenten A) bis E) auftreten kann, so daß im Endprodukt keine reine Mischung dieser Komponenten mehr vorliegt.

Die erfindungsgemäßen Formmassen zeichnen sich durch ihre ausgewogenen Eigenschaften, wie z.B durch ihre gute Schlagzähigkeit (auch mehraxial) zusammen mit hoher Fließfähigkeit aus. Hervorzuheben ist auch ihre helle Eigenfarbe.

Sie eignen sich besonders zur Herstellung von Formkörpern durch Spritzguß oder Extrusion.

## Beispiele 1 bis 9

Herstellung modifizierter Polyphenylenether B

$B_1$: 78,5 Gew.% Poly-(2,6-dimethyl-1,4-phenylenether (PPE) mit einer relativen Viskosität von 0,63 (gemessen in 1 gew.%iger Lösung in $CHCl_3$ bei 25° C), 20 Gew.% Polystyrol (PS 144 C, Schmelzflußindex MFI bei 200° C/5 kg Belastung = 24 g/10 min) 1,45 Gew.% Fumarsäure und 0,05 Gew.% tert-Butylhydroperoxid wurden in einen Zweischneckenextruder (ZSK 53; Werner & Pfleiderer) dosiert, in einem ersten Teil unter Verwendung von Knetelementen bei 255° C aufgeschmolzen, in einem zweiten Teil unter Kneten und Verwendung von Knetelementen bei 265° C umgesetzt und anschließend in einer Entgasungszone bei 255° C durch Anlegen von Vakuum entgast. Die mittlere Verweilzeit im Extruder betrug 2,5 min. Die austretende Schmelze wurde durch ein Wasserbad geleitet, granuliert und getrocknet. Das Granulat hatte einen Fumarsäuregehalt von 0,9 Gew.% und eine hellgelbe Farbe.

$B/V_1$: Zum Vergleich wurde ein modifizierter PPE aus 97,5 Gew.% Polyphenylen-ether (wie bei $B_1$) und 2,5 Gew.% Fumarsäure wie bei der Herstellung von $B_1$ hergestellt.

$B/V_2$: Als zweites Vergleichsprodukt wurde ein aus 86 Gew.% PPE, 10 Gew.% Polystyrol, 2,5 Gew.% Fumarsäure und 1,5 Gew.% Dicumylperoxid (PPE und Polystyrol waren mit den bei der Herstellung von $B_1$ eingesetzten Produkten identisch) hergestellter modifizierter PPE eingesetzt. Der Fumarsäure-Gehalt betrug 0,9 Gew.% und das Produkt war braun gefärbt.

Als Komponenten A, C, D und E wurden folgende Produkte eingesetzt:

<u>Komponente $A_1$:</u>

Polyamid-6 (Polycaprolactam) mit einem Molekulargewicht (Gewichtsmittelwert) von 38.000.

<u>Komponente $C_1$:</u>

Poly-(2,6-dimethyl-1,4-phenylen)ether mit einer relativen Viskosität von 0,63 (gemessen in 1 gew.%iger Lösung in $CHCl_3$ bei 25° C).

<u>Komponente D:</u>

Hochschlagzähes Polystyrol (HIPS) mit einem Gehalt von 8 Gew.% Butadien (Buna CB NX 529 C, Fa. Bayer anionisch hergestellt) und einem Schmelzindex (200° C/5,0 kg) von 15 g/10 min.

<u>Komponente E:</u>

Styrol-Butadien-Styrol-Dreiblockcopolymer mit einem Styrolgehalt von 30 Gew.% (Cariflex® TR 1102 der Fa. Shell);

Zur Herstellung der Formmassen in den Beispielen 1-5, 7-16 und 17-20 wurden die Komponenten A) bis E) bzw. $B/V_1$) und $B/V_2$) wie in Tabelle 1 angegeben auf einem Zweischneckenextruder gemischt, die Formmassen wurden granuliert und im Spritzguß zu Formkörpern verarbeitet.

Die Formmassen in den Vergleichsbeispielen 6 und 17 wurden entsprechend hergestellt, nur wurde kein modifizierter Polyphenylenether eingesetzt. Die erhaltenen Produkte waren teilweise stark vernetzt, ließen sich nur schwer verarbeiten und nicht granulieren.

Die Ergebnisse der Schlagzähigkeits- und Kerbschlagzähigkeitsmessungen sind Tabelle 1 zu entnehmen.

Tabelle 1

| Beispiel Nr. | Gew.-% | | | | | DIN 53453 Schlagzähigkeit kJ/m² (23 °C) | DIN 53453 Kerbschlagzähigkeit kJ/m² (23 °C) | Farbe |
|---|---|---|---|---|---|---|---|---|
| | PA | mod.PPE | PPE | PS | Kautschuk | | | |
| | $A_1$ | B | $C_1$ | D | E | | | |
| 1 | 60 | 40 $B_1$ | - | - | - | 29,3 | 4,1 | hellgelb |
| 2* | 54,5 | - | 45,5 | - | - | 8,2 | 0,4 | hellgelb |
| 3* | 48,2 | 39,5 $B/V_1$ | - | - | 12,3 | kein Bruch | 17,3 | hellgelb |
| 4* | 48,2 | - | 39,5 | - | 12,3 | 13,1 | 0,8 | hellgelb |
| 5* | 48,2 | 39,5 $B/V_2$ | - | - | 12,3 | 44,9 | 1,4 | braun |
| 6* | 47,8 | - | 39,1 | 0,9 MSA | 12,2 | 30 - 60 + | 1,2 - 3,7 + | braun |
| 7 | 54,5 | 18,2 $B_1$ | 18,2 | - | 9,1 | kein Bruch | 16,5 | hellgelb |
| 8 | 52,6 | 17,5 $B_1$ | 8,8 | 8,8 | 12,3 | kein Bruch | 19,2 | fast weiß |
| 9 | 61,4 | 17,5 $B_1$ | - | 8,8 | 12,3 | kein Bruch | 18,7 | fast weiß |

* Vergleichsbeispiele

\+ stark schwankende Meßwerte

In diesen Beispielen wurde statt Polystyrol Maleinsäureanhydrid eingesetzt.

Die Ergebnisse in Tabelle 1 belegen, daß sich die erfindungsgemäßen Formmassen, die den modifizierten Polyphenylenether enthalten, durch eine sehr gute Schlagzähigkeit und Kerbschlagzähigkeit und eine nur schwache Färbung im Vergleich zu bekannten Formmassen auszeichnen.

Beispiele 10 bis 18

Herstellung modifizierter Polyphenylenether B

$B_2$: 99,1 Gew.% Poly-(2,6-dimethyl-1,4-phenylen)ether mit einer relativen Viskosität von 0,60 (gemessen in 1 gew.%iger Lösung in $CHCl_3$ bei 25°C), 0,84 Gew.% N-Phenylmaleinimid und 0,06 Gew.% Radikalstarter (wie bei $B_1$) wurden in einen Zweischneckenextruder dosiert (ZSK 53, Werner & Pfleiderer), in einem ersten Teil unter Verwendung von Knetelementen bei 280°C aufgeschmolzen, anschließend in einem zweiten Teil unter Kneten und Verwendung von zurückfördernden Knetelementen bei 270°C umgesetzt und anschließend in einer Entgasungszone bei 280°C durch Anlegen von Vakuum entgast. Die mittlere Verweilzeit im Extruder betrug 2 min. Die austretende Schmelze wurde durch ein Wasserbad geleitet, granuliert und getrocknet. Der IR-spektroskopisch an einem Film gemessene Gehalt an N-Phenylmaleinimid betrug 0,6 Gew.%.

$B_3$: 88 Gew.% PPE (wie bei $B_3$), 10 Gew.% Polystyrol (wie bei $B_1$, Beispiele 1 bis 20) 1,97 Gew.% N-Phenylmaleinimid und 0,03 Gew.% Radikalstarter (wie bei $B_1$) wurden wie für $B_2$) beschrieben, umgesetzt. Der N-Phenylmaleinimid-Gehalt betrug 1,0 Gew.%.

$B/V_3$: Zum Vergleich wurde ein modifizierter PPE aus 99,1 Gew.% Poly(2,6-dimethyl-1,4-phenylen)ether (wie bei B") und 0,9 Gew.% N-Phenylmaleinimid wie bei B" beschrieben hergestellt.

Zur Herstellung der erfindungsgemäßen Formmassen wurden die Komponenten A) bis E) auf einem Zweischneckenextruder bei 280°C abgemischt, die erhaltene Formmasse wurde granuliert und getrocknet.

Die Komponenten A, C, D und E waren die gleichen wie in den Beispielen 1 bis 9.

Die Vergleichsbeispiele 11, 14 und 16 wurden ohne die Komponente $B_2$ oder $B_3$ hergestellt, das Vergleichsbeispiel 17 unter Verwendung der Komponente $B/V_3$.

Die Zusammensetzung der einzelnen Formmassen und die Ergebnisse der Schlagzähigkeits- und Kerbschlagzähigkeitsmessungen sind in Tabelle 2 angegeben.

Tabelle 2

| Beispiel Nr. | Gew.-% | | | | | DIN 53453 Schlagzähigkeit kJ/m² (23°C) | DIN 53453 Kerbschlagzähigkeit kJ/m² (23°C) |
|---|---|---|---|---|---|---|---|
| | PA | mod.PPE | PPE | PS | Kautschuk | | |
| | $A_1$ | B | $C_1$ | D | E | | |
| 10 | 50 | 50 $B_2$ | - | - | - | 25,3 | 4,4 |
| 11* | 50 | - | 50 | - | - | 7,1 | 0,2 |
| 12 | 47,8 | 39,1 $B_2$ | - | - | 13,1 | kein Bruch | 16,3 |
| 13 | 50 | 22,7 $B_2$ | 18,2 | - | 9,1 | kein Bruch | 10,4 |
| 14* | 50 | - | 40,9 | - | 9,1 | 10,1 | 0,9 |
| 15 | 65,4 | 28,1 $B_3$ | - | - | 6,5 | 83,7 | 7,0 |
| 16* | 65,4 | - | 28 | - | 6,5 | 8,1 | 0,8 |
| 17* | 72,8 | 18,2 $B/V_3$ | - | 4,5 | 4,5 | 65,2 | 4,8 |
| 18 | 65,6 | 8,2 $B_3$ | - | 16,4 | 9,8 | kein Bruch | 8,1 |

* Vergleichsbeispiele

Auch in diesen Beispielen wird deutlich, daß sich die erfindungsgemäßen Formmassen im Vergleich zu bekannten Formmassen insbesondere durch eine gute Schlagzähigkeit und Kerbschlagzähigkeit auszeichnen.

Beispiele 19 bis 26

Herstellung modifizierter Polyphenylenether B

$B_4$: 96 Gew.% Poly-(2,6-dimethyl-1,4-phenylen)ether mit einer relativen Viskosität von 0,57 (gemessen an einer 1 gew.%igen Lösung in $CHCl_3$ bei 25 °C) 3,92 Gew.% Methacrylamid und 0,08 Gew.% Radikalstarter (wie bei $B_1$) wurden in einen Zweischneckenextruder (ZSK 53, Werner & Pfleiderer) dosiert, in einem ersten Teil unter Verwendung von Knetelementen bei 270 °C aufgeschmolzen, in einem zweiten Teil unter Kneten und Verwendung von zurückfördernden Knetelementen bei 270 °C umgesetzt und anschließend bei 280 °C in einer Entgasungszone bei 280 °C durch Anlegen von Vakuum entgast. Die mittlere Verweilzeit im Extruder betrug 3 min. Die austretende Schmelze wurde durch ein Wasserbad geleitet und granuliert. Der IR-spektroskopisch an einem gepreßten Film bestimmte Methacrylamidgehalt im Harz betrug 1,8 Gew.%.
$B_5$: 84 Gew.% PPE (wie bei $B_4$), 8 Gew.% Polystyrol (wie bei $B_1$), 7,95 Gew.% Methacrylamid und 0,05 Gew.% Radikalstarter (wie bei $B_1$) wurden wie bei der Herstellung von $B_4$ bei 280 °C umgesetzt. Der Methacrylamidgehalt im Harz betrug 3,1 Gew.%.
$B/V_4$: 64 Gew.% PPE (wie bei $B_5$), 30 Gew.% Polystyrol, 5 Gew.% N-(n-Butyl)methacrylamid und 1 Gew.% Dicumylperoxid wurden wie bei der Herstellung von $B_4$ umgesetzt. Der Gehalt an N-(n-Butyl)-methacrylamid betrug 2,3 Gew.%.

Die Komponenten $B_4$ und $B_5$ wurden zur Herstellung der erfindungsgemäßen Formmassen mit den folgenden Komponenten A, C, D und E bei 280 °C in einem Zweischneckenextruder gemischt, die Formmasse wurde granuliert und im Spritzguß zu Formkörpern verarbeitet.

Komponente $A_2$

Polyamid-6 (Polycaprolactam) mit einem Molekulargewicht (Gewichtsmittelwert) von 34.000.

Komponente $C_2$:

Poly-(2,6-dimethyl-1,4-phenylen)ether mit einer relativen Viskosität von 0,57 (gemessen in 1 gew.%iger Lösung in $CHCl_3$ bei 25 °C).

Komponenten D und E

Diese Komponenten waren die gleichen, wie die in den Beispielen 1 bis 20 eingesetzten Komponenten.
Die Zusammensetzung der einzelnen Massen und die Ergebnisse der Schlagzähigkeits- und Kerbschlagzähigkeitsmessungen sind der Tabelle 3 zu entnehmen.

Tabelle 3

| Beispiel Nr. | Gew.-% | | | | | DIN 53453 Schlagzähigkeit kJ/m² (23 °C) | DIN 53453 Kerbschlagzähigkeit kJ/m² (23 °C) |
|---|---|---|---|---|---|---|---|
| | PA | mod.PPE | PPE | PS | Kautschuk | | |
| | $A_2$ | B | $C_2$ | D | E | | |
| 19 | 53,6 | 35,7 $B_4$ | - | - | 10,7 | kein Bruch | 12,7 |
| 20* | 53,6 | - | 35,7 | - | 10,7 | 18,2 | 1,2 |
| 21 | 50,8 | 33,9 $B_4$ | 8,5 | - | 6,8 | kein Bruch | 10,6 |
| 22 | 45,4 | 45,4 $B_5$ | - | - | 9,2 | kein Bruch | 11,5 |
| 23* | 45,4 | - | 45,4 | - | 9,2 | 12,4 | 1,6 |
| 24* | 45,4 | - | 40,9 | 4,5 | 9,2 | 15,3 | 2,4 |
| 25 | 31,7 | 39,7 $B_4$ | 7,9 | 15,9 | 4,8 | 86,6 | 6,3 |
| 26* | 42,0 | 34,9 B/$V_4$ | - | 12,8 | 10,3 | 83,6 | 6,5 |

* Vergleichsbeispiele ohne den modifizierten PPE

Beispiele 27 bis 34

Herstellung modifizierter Polyphenylenether B

$B_6$: 97 g ( ≙ 97 Gew.%) Poly-(2,6-dimethyl-1,4-phenylen)ether ($b_1$) (relative Viskosität 0,59, gemessen in 1-gew.%iger Lösung in $CHCl_3$ bei 25 °C), 2,96 g ( ≙ 2,96 Gew.%) N-Methacryloyl-ε-caprolactam ($b_3$) und 0,04 Gew.% des Radikalstarters wie bei $B_1$ wurden in einen Zweischneckenextruder (ZSK 53, Werner & Pfleiderer) dosiert, in einem ersten Teil unter Verwendung von Knetelementen bei 270 °C aufgeschmolzen, anschließend in einem zweiten Teil unter Kneten und Verwendung von rückfördernden Knetelementen bei 270 °C umgesetzt, und anschließend in einer Entgasungszone bei 280 °C durch Anlegen von Vakuum entgast. Die mittlere Verweilzeit im Extruder betrug 3 min. Die austretende Schmelze wurde durch ein Wasserbad geleitet, granuliert und getrocknet. Der Gehalt an N-Methacryloyl-ε-caprolactam im Polyphenylenetherharz wurde IR-spektroskopisch zu 1,4 Gew.% bestimmt.

B/$V_5$: 86 g Poly(2,6-dimethyl-1,4-phenylen)ether (wie bei Herstellung von $B_1$ verwendet), 10 g Polystyrol (PS 144 C der BASF AG, Schmelzindex (MFI) bei 200 °C/5 kg Belastung = 24 g/10 min), 2 g N-Methacryloyl-ε-caprolactam und 2 Gew.% des Radikalstarters wie bei $B_1$ wurden wie bei der Herstellung von $B_1$ bei 280 °C umgesetzt. Der Gehalt an N-Methacryloyl-ε-caprolactam im PPE-Harz betrug 0,9 Gew.%.

Zur Herstellung der erfindungsgemäßen Formmassen wurde der modifizierte Polyphenylenether $B_6$ mit den Komponenten A, C, D und E in einem Zweischneckenextruder bei 280 °C gemischt, die Formmasse wurde granuliert und im Spritzguß zu Formkörpern verarbeitet.

Folgende Komponenten A, C, D und E wurden eingesetzt.

Komponente A:

Hier wurde das Polyamid $A_2$ aus den Beispielen 30 bis 37 eingesetzt.

Komponente $C_3$:

Poly-(2,6-dimethyl-1,4-phenylen)ether mit einer relativen Viskosität von 0,59 (gemessen in 1 gew.%iger Lösung in $CHCl_3$ bei 25 °C).

Die Komponenten D und E waren die gleichen wie in den Beispielen 1 bis 20.

Die Zusammensetzung der einzelnen Formmassen und die Ergebnisse der Schlagzähigkeits- und Kerbschlagzähigkeitsmessungen sind in Tabelle 4 angegeben.

Tabelle 4

| Beispiel Nr. | Gew.-% | | | | | DIN 53453 Schlagzähigkeit kJ/m² (23 °C) | DIN 53453 Kerbschlagzähigkeit kJ/m² (23 °C) |
|---|---|---|---|---|---|---|---|
| | PA | mod.PPE | PPE | PS | Kautschuk | | |
| | $A_2$ | B | $C_3$ | D | E | | |
| 27 | 50,9 | 41,7 $B_6$ | - | - | 7,4 | kein Bruch | 11,6 |
| 28* | 50,9 | - | 41,7 | - | 7,4 | 12,6 | 0,9 |
| 29 | 49,1 | 22,3 $B_6$ | 17,9 | - | 10,7 | 85,3 | 9,9 |
| 30 | 50 | 31,8 $B_6$ | - | 9,1 | 9,1 | kein Bruch | 10,2 |
| 31* | 60 | 40 $B/V_5$ | - | - | - | 24 | 1,7 |
| 32* | 60 | - | 40 | - | - | 5,6 | 0,3 |
| 33 | 54,5 | 36,4 $B_6$ | - | - | 9,1 | 77,1 | 7,3 |
| 34* | 59,1 | 18,2 $B/V_5$ | 13,6 | - | 9,1 | 60,1 | 4,8 |

* Vergleichsbeispiele

Auch die Ergebnisse dieser Beispiele beweisen die vorteilhaften Eigenschaften der erfindungsgemäßen Formmassen im Vergleich zu bekannten Formmassen.

Beispiele 35 bis 42

Herstellung modifizierter Polyphenylenether B

$B_7$: 94 Gew.% Poly(2,6-dimethyl-1,4-phenylenether (PPE) (rel. Viskosität 0,55, gemessen in 1-gew.%iger Lösung in $CHCl_3$ bei 25 °C), 5 Gew.% Polystyrol (MFI bei 200 °C und 5,0 kg Belastung = 24 g/10 min), 0,95 Gew.% Maleinsäuremonoethylester und 0,05 Gew.% des Radikalstarters wie bei $B_1$ wurden in einen Zweischneckenextruder gegeben und in einem ersten Teil bei 280 °C aufgeschmolzen. In einem zweiten Teil wurde unter Kneten und Verwendung von rückfördernden Knetelementen bei 280 °C umgesetzt und anschließend das Produkt in einer Entgasungszone bei 280 °C durch Anlegen von Vakuum entgast. Die mittlere Verweilzeit im Extruder betrug 3,5 min. Die extrudierte Schmelze wurde durch ein Wasserbad geleitet und anschließend granuliert und getrocknet.

$B/V_6$: 68,7 Gew.% PPE, 30,6 Gew.% Polystyrol (beides wie bei $B_{10}$) und 0,7 Gew.% Maleinsäure-monoi-propylester wurden wie bei $B_{10}$ beschrieben umgesetzt.

Folgende Komponenten A, C, D und E wurden eingesetzt:

Komponente A:

Hier wurde die Komponente $A_1$ aus den Beispielen 1 bis 20 eingesetzt.

Komponente $C_4$:

Poly(2,6-dimethyl-1,4-phenylen)ether mit einer relativen Viskosität von 0,55 (in 1-gew.%iger Lösung in $CHCl_3$ bei 25°C).

Komponenten D und E:

Die Komponenten D und E waren die gleichen wie in den Beispielen 1 bis 20.

Die Komponenten A bis E wurden auf einem Zweischneckenextruder bei 280°C abgemischt, die Formmasse wurde granuliert und im Spritzguß zu Formkörpern verarbeitet.

Die Zusammensetzung der Formmassen und die Meßergebnisse sind der Tabelle 5 zu entnehmen.

Tabelle 5

(Alle % Angaben in Gew. %)

| Beispiel Nr. | PA | mod.PPE | PPE | PS | Kautschuk | Kerbschlagzähigkeit DIN 53453 kJ/m² (23°C) |
|---|---|---|---|---|---|---|
| | $A_1$ | B | $C_4$ | D | E | |
| 35 | 55 | 45 $B_7$ | - | - | - | 3,9 |
| 36* | 55 | - | 45 | - | - | 0,4 |
| 37 | 45,0 | 45 $B_7$ | - | - | 10,0 | 18,1 |
| 38 | 54,5 | 18,2 $B_7$ | 18,2 | - | 9,1 | 11,0 |
| 39* | 54,5 | - | 36,4 | - | 9,1 | 0,4 |
| 40 | 51,9 | 33 $B_7$ | - | 9,4 | 5,7 | 9,8 |
| 41* | 51,9 | - | 33,0 | 9,4 | 5,7 | 0,7 |
| 42* | 45,5 | 45,5 $B/V_6$ | - | - | 9,0 | 5,8 |

* = Vergleichsbeispiele

Beispiel 43 (Vergleichsbeispiel)

47,8 Gew.% Polyamid $A_1$), 38,8 Gew.% PPE $C_4$), 12,9 Gew.% Kautschuk E) und 0,5 Gew.% Maleinsäureanhydrid wurden gemäß Beispiel 35 abgemischt. Das erhaltene Granulat war schwer verarbeitbar.

Beispiel 44 (Vergleichsbeispiel)

42,6 Gew.% Polyamid $A_1$), 38,6 Gew.% PPE $C_4$), 12,8 Gew.% Kautschuk E) und 1 Gew.% eines Styrol/Maleinsäureanhydrid-Copolymerisats (Molverhältnis 1:1) wurden gemäß Beispiel 35 abgemischt. Das Granulat war nur schwer verarbeitbar.

Beispiele 45 bis 54

Komponente A

$A_3$: Polyamid-4,6

$A_4$: Polycaprolactam mit einem Molekulargewicht (Gewichtsmittelwert) von 38 000

$A_5$: Polyhexamethylenadipinsäureamid mit einem Molekulargewicht (Gewichtsmittel) von 33 000.

Komponente B

Hier wurden die Komponenten $B_1$ (Beschreibung bei Beispielen 1 bis 9) und $B_7$ (Beschreibung bei Beispielen 35 bis 42) eingesetzt.

Komponente C

$C_5$: Poly(2,6-dimethyl-1,4-phenylen)ether mit einer relativen Viskosität von 0,53 (gemessen in 1 gew.%iger Lösung in $CHCl_3$ bei 25° C).

Komponenten D und E

Hier wurden die gleichen Komponenten wie in den Beispielen 1 bis 9) und $B_7$ (Beschreibung bei Beispielen 35 bis 42) eingesetzt.

Komponente C

$C_5$: Poly(2,6-dimethyl-1,4-phenylen)ether mit einer relativen Viskosität von 0,53 (gemessen in 1 gew.%iger Lösung in $CHCl_3$ bei 25° C).

Komomponenten D und E

Hier wurden die gleichen Komponenten wie in den Beispieen 1 bis 9 eingesetzt.

Zur Herstellung der erfindungsgemäßen Formmassen wurden die Komponenten in den in Tabelle 7 angegebenen Mengenverhältnissen auf einem Zweischneckenextruder bei 310° C abgemischt; die mittlere Verweilzeit betrug 2,5 min. Anschließend wurde die Mischung extrudiert, granuliert und im Spritzguß zu Formkörpern verarbeitet.

Die Ergebnisse der Kerbschlagzähigkeitsmessungen (nach DIN 53 453) und der Farbeindruck sind ebenfalls in Tabelle 7 wiedergegeben.

Tabelle 7

| Beispiel Nr. | Gew.% | | | | | DIN 53 453 Kerbschlagzähigkeit kJ/m² (23° C) | Eigenfarbe |
|---|---|---|---|---|---|---|---|
| | PA | mod.PPE | PPE | PS | Kautschuk | | |
| | | B | $C_5$ | D | E | | |
| 45 | 47,8 $A_3$ | 34,8 $B_1$ | 4,3 | - | 13,1 | 20 | fast weiß |
| 46 | 47,8 $A_4$ | 34,8 $B_1$ | 4,3 | - | 13,1 | 15 | hellgelb |
| 47 | 47,8 $A_5$ | 34,8 $B_1$ | 4,3 | - | 13,1 | 12,8 | gelb |
| 48 | 53,7 $A_3$ | 28,9 $B_7$ | 2,5 | - | 14,9 | 21,7 | fast weiß |
| 49 | 53,7 $A_5$ | 28,9 $B_7$ | 2,5 | - | 14,9 | 14,3 | gelb |
| 50 | 50,0 $A_3$ | 16,7 $B_7$ | 16,7 | - | 16,6 | 20,9 | fast weiß |
| 51 | 50,0 $A_5$ | 16,7 $B_7$ | 16,7 | - | 16,6 | 13,0 | mittelgelb |
| 52 | 40,7 $A_3$ | 40,7 $B_1$ | - | 0,8 | 17,8 | 26,0 | fast weiß |
| 53 | 50,0 $A_3$ | 25,0 $B_1$ | 8,3 | - | 16,7 | 23,5 | fast weiß |
| 54 | 42,4 $A_3$ | 21,2 $B_7$ | 21,2 | - | 15,2 | 19,4 | fast weiß |

**Ansprüche**

1. Thermoplastische Formmassen, enthaltend als wesentliche Komponenten
A) 5 - 95 Gew.% eines Polyamids
B) 5 - 95 Gew.% eines modifizierten Polyphenylenethers, hergestellt aus

$b_1$) 4,95 - 99,9 Gew.% eines Polyphenylenethers,
$b_2$) 0 - 90 Gew.% eines vinylaromatischen Polymeren,
$b_3$) 0,05 - 10 Gew.% mindestens einer Verbindung aus der Gruppe gebildet aus

$b_{31}$) einer $\alpha,\beta$-ungesättigten Dicarbonylverbindung,
$b_{32}$) eines Amid-Gruppen enthaltenden Monomeren mit einer polymerisierbaren Doppelbindung und
$b_{33}$) eines Lactam-Gruppen enthaltenden Monomeren mit einer polymerisierbaren Doppelbindung,

$b_4$) 0 - 80 Gew.% weiterer pfropfaktiver Monomerer und $b_5$) 0,01 - 0,09 Gew.% eines Radikalstarters

C) 0 - 90 Gew.% eines nicht-modifizierten Polyphenylenethers,
D) 0 - 45 Gew.% eines vinylaromatischen Polymeren
E) 0 - 40 Gew.% eines schlagzäh modifizierenden Kautschuks.

2. Thermoplastische Formmassen nach Anspruch 1, dadurch gekennzeichnet, daß die Komponente $b_{32}$) eine Verbindung der allgemeinen Formel II oder III ist:

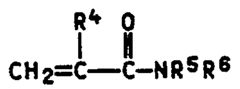 (II)

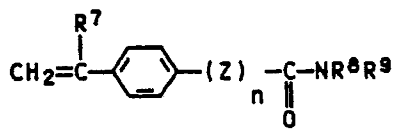 (III)

wobei $R^4$, $R^5$, $R^6$, $R^7$, $R^8$ und $R^9$ Wasserstoff, Alkyl- oder Alkoxygruppen mit 1 bis 12 C-Atomen, Cycloalkylgruppen mit 1 bis 12 C-Atomen oder Arylgruppen und Z eine Alkylengruppe mit 1 bis 12 C-Atomen darstellen und n den Wert 0 oder 1 hat.

3. Thermoplastische Formmassen nach Anspruch 1, dadurch gekennzeichnet, daß die Komponente $b_{33}$) eine Verbindung der allgemeinen Formel IV ist

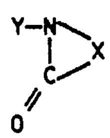 (IV)

wobei X eine lineare oder verzweigte Alkylengruppe mit 2 bis 15 C-Atomen darstellt und Y die allgemeine Formel

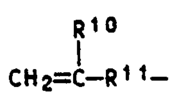

hat,
wobei $R^{10}$ Wasserstoff, eine Alkyl- oder Alkoxygruppe mit 1 bis 4 C-Atomen und $R^{11}$ einen der nachstehenden zweiwertigen Reste

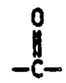

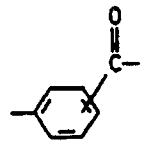 oder

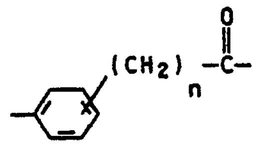 ,

wobei n eine ganze Zahl von 1 bis 4 ist, darstellen.

4. Thermoplastische Formmassen nach mindestens einem der Ansprüche 1 bis 3, gekennzeichnet durch folgende Gehalte:

A) 5 - 95 Gew.% eines Polyamids

B) 5 - 95 Gew.% eines modifizierten Polyphenylenethers, hergestellt aus

$b_1$) 4,95 - 99,9 Gew.% eines Polyphenylenethers,

$b_2$) 0 - 90 Gew.% eines vinylaromatischen Polymeren,

$b_3$) 0,05 - 10 Gew.% Fumarsäure

$b_4$) 0 - 80 Gew.% weitere pfropfaktive Monomere

$b_5$) 0,02 - 0,08 Gew.% eines Radikalstarters

C) 0 - 90 Gew.% eines nicht-modifizierten Polyphenylenethers,

D) 0 - 45 Gew.% eines vinylaromatischen Polymeren

E) 0 - 40 Gew.% eines schlagzäh modifizierenden Kautschuks.

5. Thermoplastische Formmassen nach mindestens einem der Ansprüche 1 bis 4, dadurch gekennzeichnet, daß der Radikalstarter $b_5$) ausgewählt ist aus der Gruppe bestehend aus organischen Hydroperoxiden oder hochverzweigten Alkanen.

6. Thermoplastische Formmassen nach mindestens einem der Ansprüche 1 bis 5, dadurch gekennzeichnet, daß das Polyamid A) zu mindestens 80 Gew.% aus wiederkehrenden Einheiten der Formel V

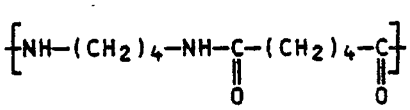

aufgebaut ist.

7. Verfahren zur Herstellung von thermoplastischen Formmassen gemäß mindestens einem der Ansprüche 1 bis 6, dadurch gekennzeichnet, daß man die Komponenten $b_1$) bis $b_5$) bei 250 bis 350 °C miteinander umsetzt und das so erhaltene modifizierte Polyphenylenoxid B) mit den Komponenten A) und C) bis E) bei Temperaturen von 250 bis 320 °C vermischt.

8. Verwendung der thermoplastischen Formmassen gemäß mindestens einem der Ansprüche 1 bis 6 zur Herstellung von Formkörpern.

9. Formkörper, hergestellt aus Formmassen gemäß mindestens einem der Ansprüche 1 bis 6 oder wie gemäß Anspruch 7 erhalten als wesentlichen Komponenten.